(19) Europäisches Patentamt
European Patent Office
Office européen des brevets

(11) EP 3 392 694 A1

(12) EUROPEAN PATENT APPLICATION

(43) Date of publication:
**24.10.2018 Bulletin 2018/43**

(51) Int Cl.:
***G02B 15/173*** *(2006.01)*

(21) Application number: **18166761.9**

(22) Date of filing: **11.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.04.2017 JP 2017081256**

(71) Applicant: **CANON KABUSHIKI KAISHA**
**Ohta-ku**
**Tokyo 146-8501 (JP)**

(72) Inventor: **KUWASHIRO, Shin**
**Ohta-ku, Tokyo 146-8501 (JP)**

(74) Representative: **Williamson, Brian**
**Canon Europe Ltd**
**European Patent Department**
**3 The Square**
**Stockley Park**
**Uxbridge, Middlesex UB11 1ET (GB)**

# (54) ZOOM LENS, AND IMAGE PICKUP APPARATUS AND IMAGE PICKUP SYSTEM INCLUDING SAME

(57) Provided is a zoom lens comprising in order from an object side to an image side, a positive first lens unit including a diffractive optical element, a negative second lens unit, a positive third lens unit including at least one positive lens, and a rear unit including one or more lens units, in which intervals between adjacent lens units are changed during zooming. The third lens unit comprises a positive lens formed by using a material with an Abbe number and a partial dispersion ratio concerning a C-line and a t-line both of which are appropriately set. In the zoom lens, a focal length of the first lens unit and a back focus of the zoom lens when focusing on infinity at a telephoto end are appropriately set.

*FIG. 1*

L0
L1
Ldoe
L2
SP
L3
LR
L4
GB
IP
4b
4a
4c

EP 3 392 694 A1

## Description

BACKGROUND OF THE INVENTION

Field of the Invention

The present invention relates to a zoom lens, and an image pickup apparatus and an image pickup system including the same, which are suitable for an image pickup optical system such as a digital camera, a video camera, a broadcast camera, a monitoring camera, and a silver halide photographic camera.

Description of the Related Art

An image pickup optical system used in an image pickup apparatus is required to be a zoom lens which has a short entire lens length, a small entire system, and a high zoom ratio. Moreover, such a zoom lens is expected to have high optical performances over the entire zoom range, for example. A so-called positive-lead zoom lens has been known as a zoom lens having a small entire system and a high zoom ratio. The positive-lead zoom lens includes a first lens unit having a positive refractive power and a second lens unit having a negative refractive power that are arranged in order from an object side to an image side, in which the second lens unit is a main variable magnification lens unit.

When a reduction in size of the entire system and an increase in the zoom ratio are conducted with the positive-lead zoom lens, the first lens unit causes a significant axial chromatic aberration, and particularly causes the axial chromatic aberration prominently at the telephoto end. A zoom lens is known in which the first lens unit is provided with a diffractive optical element in order to reduce the occurrence of chromatic aberrations such as the axial chromatic aberration and lateral chromatic aberration in the zoom lens (Japanese Patent Application Laid-Open No. 2011-090099 and No. 2013-134303).

Japanese Patent Application Laid-Open No. 2011-090099 discloses a zoom lens which includes first to fifth lens units arranged in order from an object side to an image side, and having positive, negative, positive, negative, and positive refractive power, respectively. Here, the first lens unit includes a diffractive optical element, and the zoom lens has an imaging angle of view at a wide-angle end equal to about 26° and a zoom ratio around 4. Japanese Patent Application Laid-Open No. 2013-134303 discloses a zoom lens which includes first to fourth lens units being arranged in order from an object side to an image side and having positive, negative, positive, and positive refractive power, respectively. Here, each of the first lens unit and the second lens unit includes a diffractive optical element, and the zoom lens has an imaging angle of view at a wide-angle end equal to about 76° and a zoom ratio around 16.

The use of the diffractive optical element in the positive-lead zoom lens makes it easier to obtain a high zoom ratio and high optical performances while downsizing the entire system. However, in order to obtain these effects, it is important to appropriately set a zoom type, a lens unit to provide the diffractive optical element, power (a reciprocal of a focal length) of the diffractive optical element, the refractive power of each lens unit, a lens configuration, and other factors.

In particular, there is a requirement for a monitoring camera capable of taking a bright and clear image of an object even under dark condition, such as at nighttime. For this reason, there is a case in which an object is irradiated with near-infrared light in a wavelength range from 850 nm to 940 nm and is imaged by capturing reflected light therefrom. Accordingly, a zoom lens used in the monitoring camera has to achieve good correction of chromatic aberrations in a wide wavelength range from visible light to the near-infrared light over the entire zoom range.

SUMMARY OF THE INVENTION

An object of the present invention is to provide a zoom lens which achieves good correction of chromatic aberrations in a wide wavelength range from visible light to near-infrared light while rendering the zoom lens with a short entire lens length and high in zoom ratio, and also to provide an image pickup apparatus and an image pickup system including the zoom lens.

According to a first aspect of the present invention there is provided a zoom lens as claimed in claim 1 herein.

According to a second aspect of the present invention there is provided an image pick up apparatus as claimed in claim 14 herein.

According to a third aspect of the present invention there is provided an image pick up system as claimed in claim 16 herein.

Further, features of the present invention will become apparent from the following description of exemplary embodiments with reference to the attached drawings. Each of the embodiments of the present invention described below can be implemented solely or as a combination of a plurality of the embodiments. Also, features from different embodiments can be combined where necessary or where the combination of elements or features from individual embodiments in a single embodiment is beneficial

## BRIEF DESCRIPTION OF THE DRAWINGS

Fig. 1 is a lens cross-sectional view of a zoom lens of Example 1 of the present invention at a wide-angle end when the zoom lens is focusing on infinity.
Fig. 2 includes aberration diagrams at the wide-angle end, an intermediate zoom position, and a telephoto end when the zoom lens of Example 1 is focusing on infinity.
Fig. 3 is a lens cross-sectional view of a zoom lens of Example 2 at the wide-angle end when the zoom lens is focusing on infinity.
Fig. 4 includes aberration diagrams at the wide-angle end, the intermediate zoom position, and the telephoto end when the zoom lens of Example 2 is focusing on infinity.
Fig. 5 is a lens cross-sectional view of a zoom lens of Example 3 at the wide-angle end when the zoom lens is focusing on infinity.
Fig. 6 includes aberration diagrams at the wide-angle end, the intermediate zoom position, and the telephoto end when the zoom lens of Example 3 is focusing on infinity.
Fig. 7 is a lens cross-sectional view of a zoom lens of Example 4 at the wide-angle end when the zoom lens is focusing on infinity.
Fig. 8 includes aberration diagrams at the wide-angle end, the intermediate zoom position, and the telephoto end when the zoom lens of Example 4 is focusing on infinity.
Fig. 9 is a lens cross-sectional view of a zoom lens of Example 5 at the wide-angle end when the zoom lens is focusing on infinity.
Fig. 10 includes aberration diagrams at the wide-angle end, the intermediate zoom position, and the telephoto end when the zoom lens of Example 5 is focusing on infinity.
Fig. 11 is a schematic diagram of a main part of an image pickup apparatus of an embodiment of the present invention.

## DESCRIPTION OF THE EMBODIMENTS

A zoom lens according to the present invention and an image pickup apparatus including the same will be described below with reference to the drawings. The zoom lens of this embodiment includes a first lens unit having positive refractive power, a second lens unit having negative refractive power, a third lens unit having positive refractive power, and a rear unit including one or more lens units arranged in order from an object side to an image side. In the zoom lens of this embodiment, an interval between each pair of the lens units adjacent to each other is changed during zooming (intervals between adjacent lens units are changed during zooming).

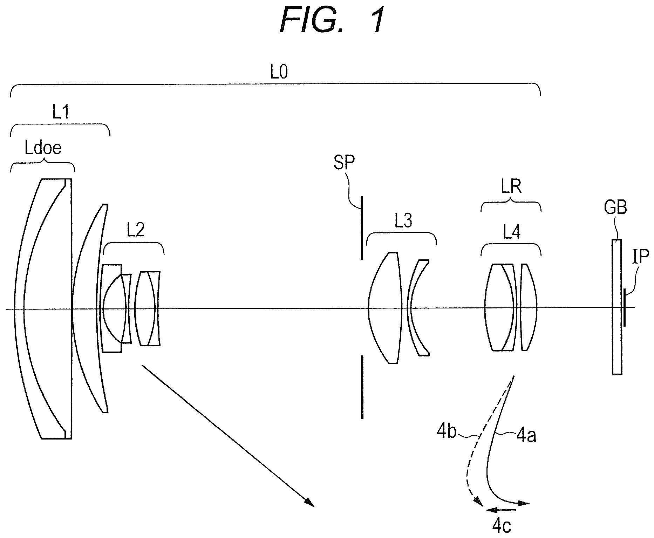

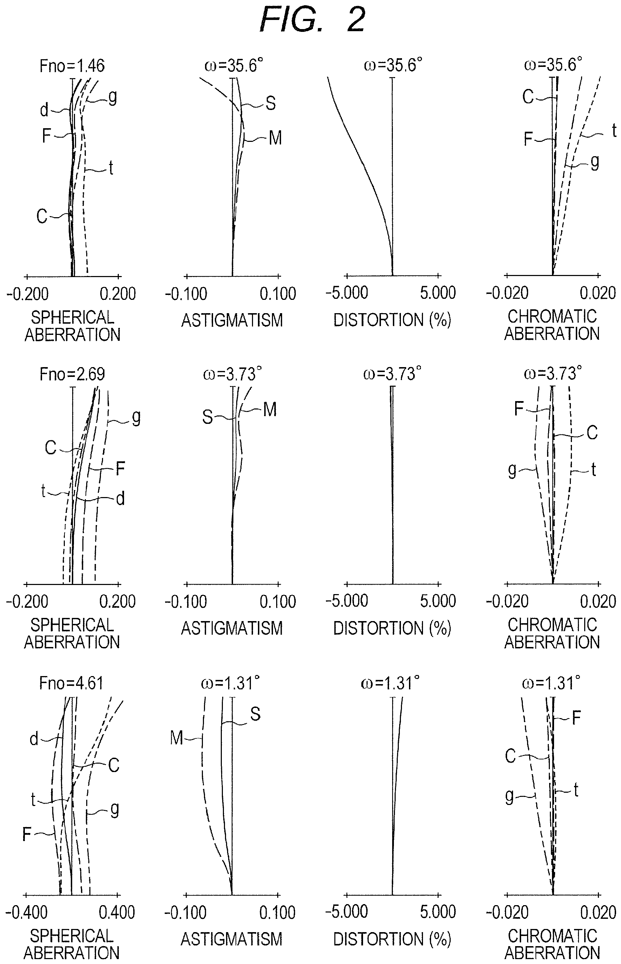

Fig. 1 is a lens cross-sectional view of a zoom lens of Example 1 of the present invention at a wide-angle end (a short focal length end) when the zoom lens is focusing on an object at infinity. Fig. 2 includes longitudinal aberration diagrams of the zoom lens of Example 1 at the wide-angle end, an intermediate zoom position, and a telephoto end (a long focal length end) in order from above when the zoom lens is focusing on the object at infinity. The zoom lens of Example 1 is a zoom lens having a zoom ratio of 29.50 and an F-number in a range from 1.46 to 4.61.

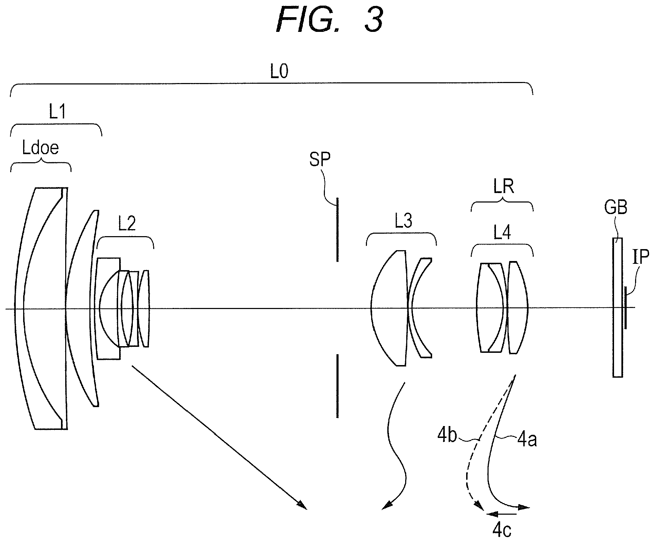

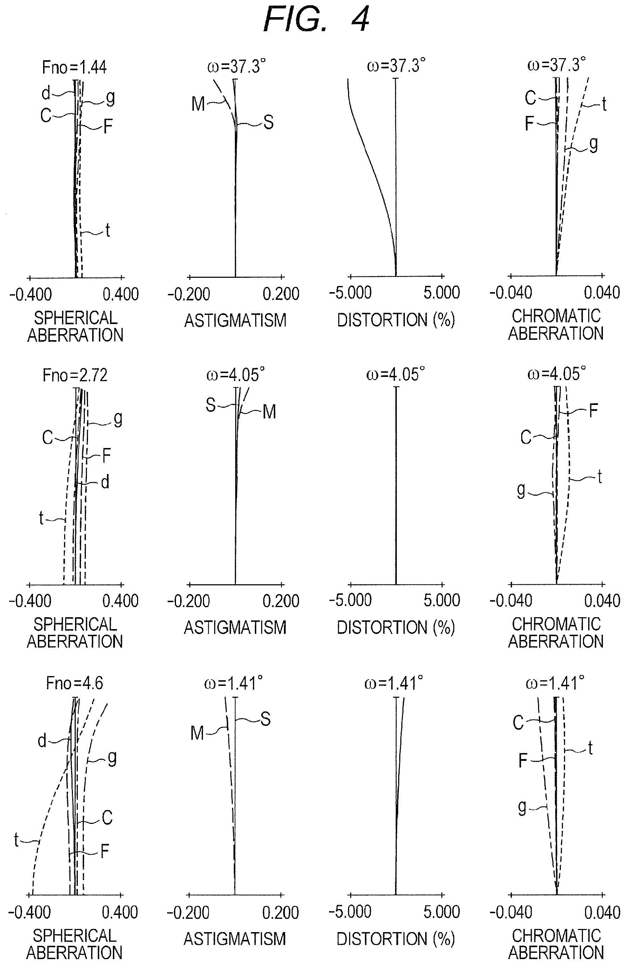

Fig. 3 is a lens cross-sectional view of a zoom lens of Example 2 of the present invention at the wide-angle end when the zoom lens is focusing on the object at infinity. Fig. 4 includes longitudinal aberration diagrams of the zoom lens of Example 2 at the wide-angle end, the intermediate zoom position, and the telephoto end in order from above when the zoom lens is focusing on the object at infinity. The zoom lens of Example 2 is a zoom lens having the zoom ratio of 29.50 and the F-number in a range from 1.44 to 4.60.

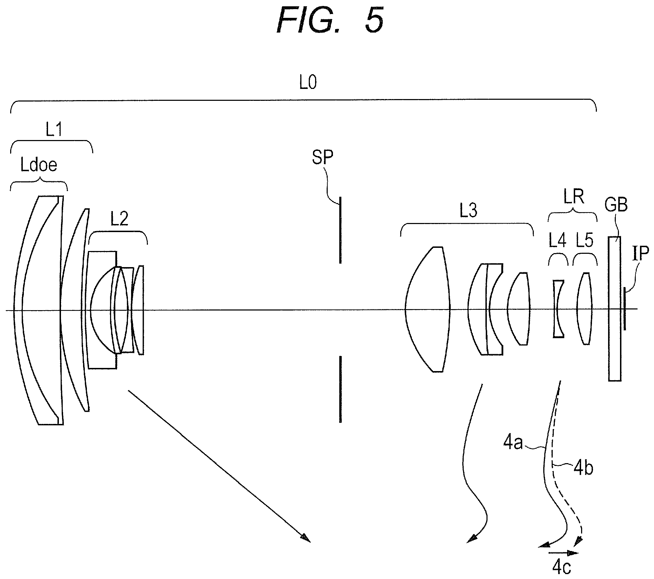

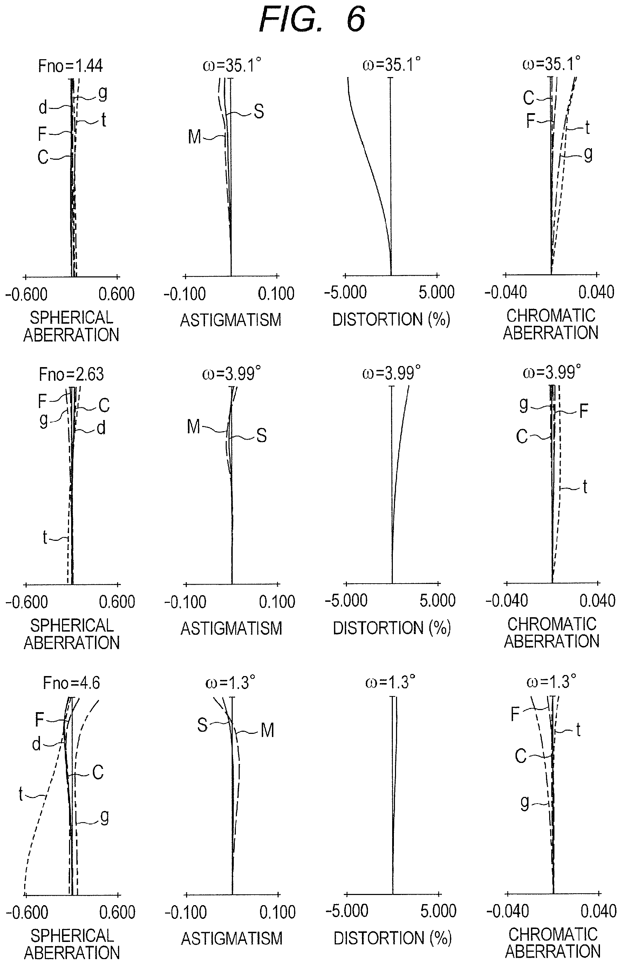

Fig. 5 is a lens cross-sectional view of a zoom lens of Example 3 of the present invention at the wide-angle end when the zoom lens is focusing on the object at infinity. Fig. 6 includes longitudinal aberration diagrams of the zoom lens of Example 3 at the wide-angle end, the intermediate zoom position, and the telephoto end in order from above when the zoom lens is focusing on the object at infinity. The zoom lens of Example 3 is a zoom lens having the zoom ratio of 29.55 and the F-number in a range from 1.44 to 4.60.

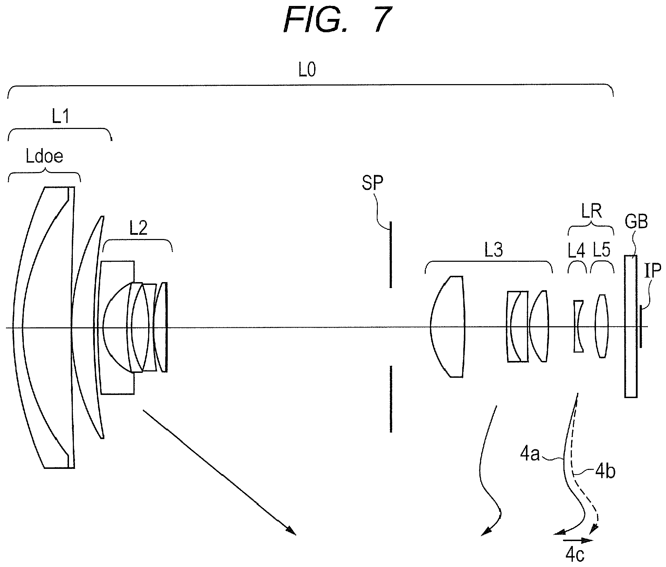

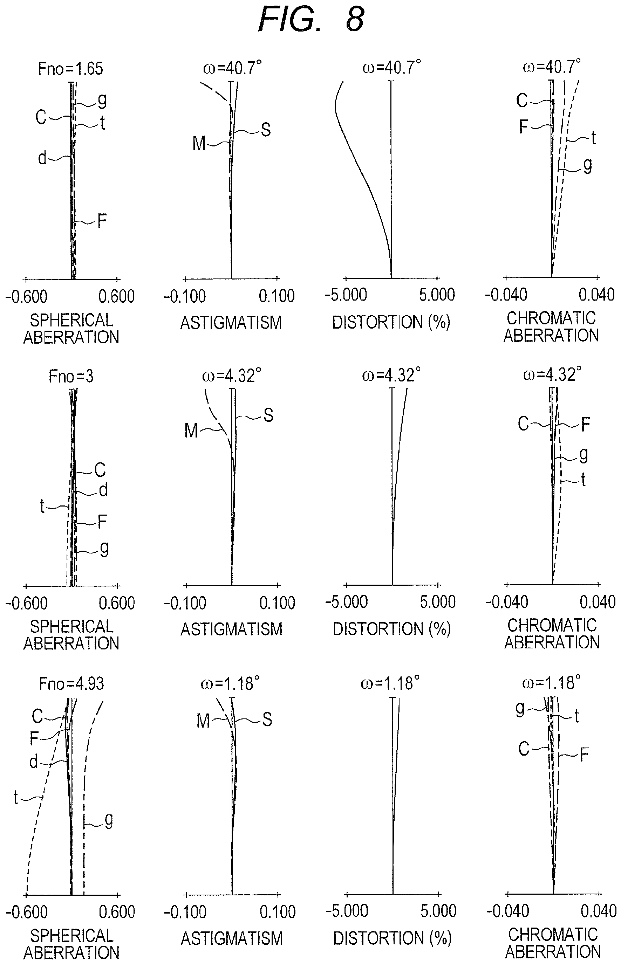

Fig. 7 is a lens cross-sectional view of a zoom lens of Example 4 of the present invention at the wide-angle end when the zoom lens is focusing on the object at infinity. Fig. 8 includes longitudinal aberration diagrams of the zoom lens of Example 4 at the wide-angle end, the intermediate zoom position, and the telephoto end in order from above when the zoom lens is focusing on the object at infinity. The zoom lens of Example 4 is a zoom lens having the zoom ratio of 35.98 and the F-number in a range from 1.65 to 4.93.

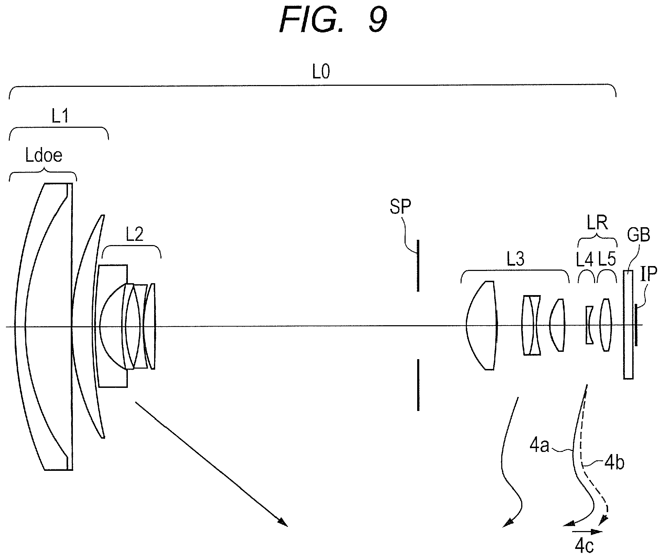

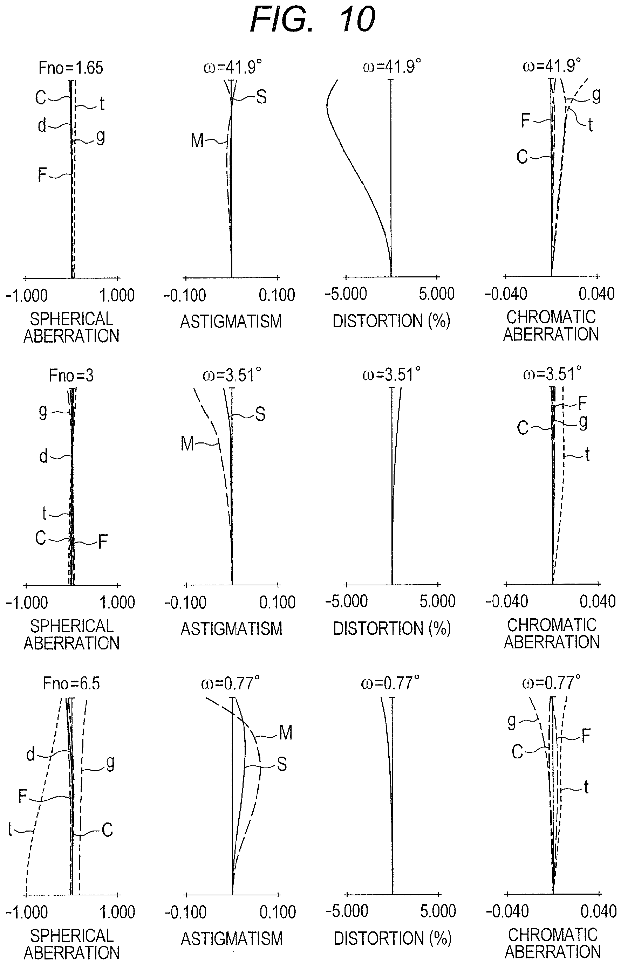

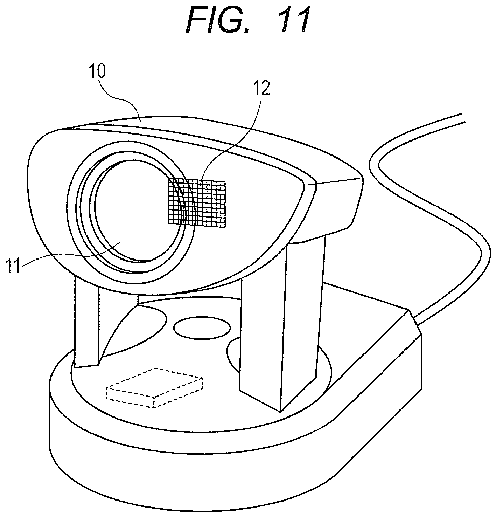

Fig. 9 is a lens cross-sectional view of a zoom lens of Example 5 of the present invention at the wide-angle end when the zoom lens is focusing on the object at infinity. Fig. 10 includes longitudinal aberration diagrams of the zoom lens of Example 5 at the wide-angle end, the intermediate zoom position, and the telephoto end in order from above when the zoom lens is focusing on the object at infinity. The zoom lens of Example 5 is a zoom lens having the zoom ratio of 64.27 and the F-number in a range from 1.65 to 6.50. Fig. 11 is a schematic diagram of a main part of an image pickup apparatus of this embodiment.

The zoom lens of this embodiment is a zoom lens used in an image pickup apparatus such as a digital camera, a video camera, a broadcast camera, a monitoring camera, and a silver halide photographic camera. Note that the zoom lens of this embodiment is also applicable to a projection optical system for a projecting apparatus (a projector).

In each lens cross-sectional view, the left side represents an object side (a front side) while the right side represents an image side (a rear side). Meanwhile, in each lens cross-sectional view, reference sign L0 denotes a zoom lens. If suffix i indicates the order of a certain lens unit counted from the object side, then reference sign Li denotes an i-th lens unit. Reference sign LR denotes a rear unit that includes one or more lens units. Reference sign SP denotes an aperture stop. Reference sign GB denotes an optical block that corresponds to any of an optical filter, a faceplate, a low-pass filter, an infrared cut filter, and the like. Reference sign Ldoe denotes a diffractive optical element.

Reference sign IP denotes an image plane. When the zoom lens is used as an image pickup apparatus for a digital camera, a video camera, and the like, the image plane IP corresponds to an image pickup plane of a solid-state image pickup element (a photoelectric conversion element) such as a CCD sensor and a CMOS sensor. On the other hand, when the zoom lens is used as an image pickup apparatus for a silver halide film camera, the image plane IP corresponds to a film surface. Each arrow in Fig. 1 represents a movement locus of each corresponding lens unit during zooming from the wide-angle end to the telephoto end.

In each example, an image plane variation caused by a change in magnification is corrected by moving a fourth lens unit L4, and focusing is conducted at the same time. A curve 4a in a solid line and a curve 4b in a dashed line concerning the fourth lens unit L4 represent the movement loci for correcting the image plane variation caused by the change in magnification when focusing on an object at infinity and on an object at close distance, respectively. Meanwhile, in Examples 1 and 2, focusing from the object at infinity to the object at close distance is performed by bringing the fourth lens unit L4 forward to the object side as indicated with an arrow 4c. In Examples 3 to 5, focusing is performed by bringing the fourth lens unit L4 back to the image side as indicated with an arrow 4c. A first lens unit L1 does not move during zooming.

In each spherical aberration diagram, reference sign Fno denotes the F-number. Meanwhile, a solid line d denotes the d-line (wavelength 587.56 nm), a chain double-dashed g line denotes the g-line (wavelength 435.84 nm), a chain C line denotes the C-line (wavelength 656.27 nm), a long dashed F line denotes the F-line (wavelength 486.13 nm), and a short dashed t line denotes the t-line (wavelength 1013.98 nm). In each of astigmatism diagrams, distortion diagrams, and lateral chromatic aberration diagrams, reference sign $\omega$ denotes an imaging half angle of view (in degrees). In each astigmatism diagram, a solid S line denotes a sagittal image plane and a dashed M line denotes a meridional image plane, each in the case of the d-line. Each distortion diagram shows the distortion in the case of the d-line. Each lateral chromatic aberration diagram shows aberrations of the g-line, the F-line, the C-line, and the t-line relative to the d-line, respectively.

In the zoom lens of Example 1 of Fig. 1 and the zoom lens of Example 2 of Fig. 3, reference sign L1 denotes a first lens unit having positive refractive power, reference sign L2 denotes a second lens unit having negative refractive power, reference L3 denotes a third lens unit having positive refractive power, and reference sign L4 denotes a fourth lens unit having positive refractive power. A rear unit LR therein consists of the fourth lens unit L4. In the zoom lens of Example 3 of Fig. 5, the zoom lens of Example 4 of Fig. 7, and the zoom lens of Example 5 of Fig. 9, reference sign L1 denotes a first lens unit having positive refractive power, reference sign L2 denotes a second lens unit having negative refractive power, reference L3 denotes a third lens unit having positive refractive power, reference sign L4 denotes a fourth lens unit having negative refractive power, and reference sign L5 denotes a fifth lens unit having positive refractive power. A rear unit LR therein consists of the fourth lens unit L4 and the fifth lens unit L5.

This embodiment aims to obtain a zoom lens which achieves good correction of chromatic aberrations in a wavelength range from the visible light to the near-infrared light while rendering its entire system small in size and high in zoom ratio, and therefore adopts the following structure. Specifically, in order to achieve good correction of the various aberrations while ensuring a high zoom ratio, the zoom lens includes: the first to third lens units having positive, negative, and positive refractive power, respectively, and the rear unit including one or more lens units arranged in order from the object side to the image side.

Moreover, in order to achieve good correction of an axial chromatic aberration at the telephoto end, the first lens unit L1 having a high incidence height of an axial marginal ray is configured to include a diffractive optical element. In this way, the axial chromatic aberration is favorably corrected in the wavelength range from the visible light to the near-infrared light.

If the diffractive optical element is not used, the first lens unit L1 has to use a lens made of a material having low dispersion and high anomalous dispersion properties in order to achieve good correction of the axial chromatic aberration at the telephoto end. In general, a lens material having low dispersion and high anomalous dispersion properties tends to have a low refractive index. As a consequence, an attempt to obtain desired refractive power leads to an increase in lens thickness and an increase in total lens length. Particularly, in order to correct the axial chromatic aberration at the wide-angle end, it is effective to use a lens made of a high anomalous dispersion material in the third lens unit that has a high incidence height of the axial marginal ray.

In the zoom lens of each example, the first lens unit L1 includes the diffractive optical element Ldoe while the third lens unit L3 includes a positive lens. Here, the Abbe number of a material of the positive lens included in the third lens unit L3 is defined as νd3p and a partial dispersion ratio thereof concerning the C-line and the t-line is defined as θCt3p. Here, the third lens unit L3 includes the positive lens formed by using the material satisfying the following conditional expressions:

$$68.0 < \nu d3p < 100.0 \quad (1);$$

and

$$-0.25 < \theta Ct3p-(0.0047\times\nu d3p+0.546) < -0.02 \quad (2).$$

A focal length of the first lens unit L1 is defined as f1 and a back focus at the telephoto end when an object distance is infinity is defined as BFt. Here, the following conditional expression is satisfied:

$$4.2 < f1/BFt < 20.0 \quad (3).$$

As a consequence of satisfying the conditional expressions (1) to (3), the chromatic aberrations in the wavelength range from the visible light to the near-infrared light are favorably corrected in each example while achieving a small entire system and a high zoom ratio.

The conditional expression (1) defines the Abbe number of the material of at least one positive lens out of the positive lenses included in the third lens unit L3. As a consequence of satisfying the conditional expression (1), high optical performances are obtained by favorably correcting the axial chromatic aberration at the wide-angle end in particular. If the Abbe number is too small so as to fall below the lower limit value in the conditional expression (1), the axial chromatic aberration frequently occurs at the wide-angle end in particular. On the other hand, if the Abbe number is too large so as to exceed the upper limit value in the conditional expression (1), the axial chromatic aberration is corrected too much at the wide-angle end in particular, which is not desirable.

The conditional expression (2) defines the partial dispersion ratio of the material of at least one positive lens out of the positive lenses included in the third lens unit L3. As a consequence of satisfying the conditional expression (2), high optical performances are obtained by favorably correcting the axial chromatic aberration in a near-infrared wavelength range. If the partial dispersion ratio of the material of the positive lens is too small so as to fall below the lower limit value in the conditional expression (2), the axial chromatic aberration of the near-infrared light is corrected too much at the wide-angle end in particular, which is not desirable. On the other hand, if the partial dispersion ratio of the material of the positive lens is too large so as to exceed the upper limit value in the conditional expression (2), the axial chromatic aberration of the near-infrared light is not adequately corrected at the wide-angle end in particular, which is not desirable.

The conditional expression (3) defines the focal length of the first lens unit L1. As a consequence of satisfying the conditional expression (3), high optical performances are obtained while achieving a wider angle of view and the reduction in size of the entire system. If the focal length of the first lens unit L1 is too short so as to fall below the lower limit value in the conditional expression (3), a spherical aberration or a coma aberration increases at the telephoto end in particular, which is not desirable. On the other hand, if the focal length of the first lens unit L1 is too long so as to exceed the upper limit value in the conditional expression (3), the lens system is increased in size, which is not desirable. Note that the notation BF (back focus) represents an air-equivalent distance from a last lens surface to a paraxial image plane.

As described above, each example sets the respective elements appropriately so as to satisfy the conditional expressions (1) to (3), thereby obtaining the zoom lens having a high angle of view, a high zoom ratio, a small entire system, and good optical performances.

In each example, it is preferable to set the numerical ranges of the conditional expressions (1) to (3) as shown below:

$$68.0 < \nu d3p < 97.0 \quad (1a);$$

$$-0.20 < \theta Ct3p-(0.0047\times \nu d3p+0.546) < -0.05 \quad (2a);$$

and

$$4.6 < f1/BFt < 18.0 \quad (3a).$$

In this embodiment, it is preferable to satisfy one or more of the following conditional expressions. Here, a refractive index of the material of the positive lens included in the third lens unit L3 is defined as nd3p. A focal length of a diffraction plane of the diffractive optical element Ldoe is defined as fdoe. A focal length of a lens and the Abbe number of a material of the lens out of the lenses included in the first lens unit L1, the lens being located at an i-th (i=1, 2,...) position counted from the object side, are defined as fli and νdli, respectively. A focal length of the second lens unit L2 is defined as f2 and a focal length of the third lens unit L3 is defined as f3.

The first lens unit L1 includes a negative lens, a positive lens, and a positive lens arranged in order from the object side to the image side. An average value of the refractive indices and an average value of the Abbe numbers of materials of the positive lenses included in the first lens unit L1 are defined as ndlp and νdlp, respectively. Here, the focal length fdoe of the diffraction plane is obtained as described below.

A phase shape Ψ of diffraction grating in the diffraction plane can be given by the following polynomial:

$$\Psi(h, m) = \{2\pi/(m\times\lambda_0)\}(C1\times h^2+C2\times h^4+C3\times h^6+...) \quad (1X),$$

where

- h: a height in a direction perpendicular to an optical axis,
- m: a diffraction order of diffracted light,
- $\lambda_0$: a design wavelength, and
- Ci: phase coefficients (i = 1, 2, 3, ...).

Here, power φ (λ, m) representing a reciprocal of the focal length of the diffraction plane relative to a certain wavelength λ and a certain diffraction order m can be expressed as shown below by using the phase coefficient C1:

$$\varphi(\lambda, m) = -2\times C1\times m\times\lambda/\lambda 0 \quad (2X).$$

In this expression (2X), the power of the diffraction plane can be set positive by setting the diffraction order m to 1 and selecting a negative value for the phase coefficient, for example.

Here, as apparent from the expression (2X), in a wavelength range that satisfies λ>λ0, as the wavelength gets longer, the positive power is linearly increased with the change in wavelength. On the other hand, in a wavelength range that satisfies λ<λ0, as the wavelength gets shorter, the positive power is linearly decreased with the change in wavelength.

When the diffraction order m is 1, the focal length fdoe of the diffraction plane is derived from the expression (2X) as shown below:

$$fdoe = -1/\{(2\times C1)\times(\lambda/\lambda 0)\} \quad (3X).$$

In this case, one or more conditional expressions shown below are preferably satisfied:

$$0.05 < nd3p-(-0.0134\times \nu d3p+2.43) < 0.50 \quad (4);$$

$$0.4 < \mathrm{fdoe}\times\sum_{i=1}^{n}\left(1/(f1i\times \nu d1i)\right) < 1.5 \quad (5);$$

$$-0.70 < f2/f3 < -0.10 \quad (6);$$

$$1.55 < nd1p < 1.80 \quad (7);$$

and

$$40.0 < \nu d1p < 65.0 \quad (8).$$

Here, $\sum_{i=1}^{n}$ represents a sum.

Meanwhile, n is the number of lenses and i is the counted number from the object side when two or more lenses are provided.

Next, a description will be given of technical meaning of each of the above-mentioned conditional expressions. The conditional expression (4) defines the refractive index and the Abbe number of the material of at least one positive lens out of the positive lenses included in the third lens unit L3. As a consequence of satisfying the conditional expression (4), it is easier to obtain good optical performances while downsizing the entire system. If the refractive index of the material of the positive lens is too small so as to fall below the lower limit value in the conditional expression (4), the curvature of a lens surface of the positive lens is increased and the lens becomes thicker. This leads to an increase in total lens length, which is not desirable.

On the other hand, if the refractive index of the material of the positive lens is too large so as to exceed the upper limit value in the conditional expression (4), a Petzval sum becomes larger in the negative direction and leads to an increase in field curvature or astigmatism, which is not desirable.

The conditional expression (5) defines the focal length of the diffraction plane of the diffractive optical element Ldoe included in the first lens unit L1. As a consequence of satisfying the conditional expression (5), it is easier to obtain high optical performances while achieving a higher zoom ratio. If the focal length of the diffraction plane of the diffractive optical element Ldoe is too short so as to fall below the lower limit value in the conditional expression (5), the axial chromatic aberration in the near-infrared region is corrected too much at the telephoto end in particular, which is not desirable.

On the other hand, if the focal length of the diffraction plane of the diffractive optical element Ldoe is too long so as to exceed the upper limit value in the conditional expression (5), the axial chromatic aberration in the near-infrared region is not adequately corrected at the telephoto end in particular, which is not desirable.

The conditional expression (6) defines a focal length ratio between the second lens unit L2 and the third lens unit L3. As a consequence of satisfying the conditional expression (6), it is easier to achieve the reduction in size of the entire system and to obtain good optical performances over entire zoom range.

If the negative focal length of the second lens unit L2 is too long (if the absolute value of the negative focal length is too large) so as to fall below the lower limit value of the conditional expression (6), a moving stroke of the second lens unit L2 associated with a change in magnification is increased. This leads to an increase in total lens length and is not desirable. On the other hand, if the negative focal length of the second lens unit L2 is too short (if the absolute value of the negative focal length is too small) so as to exceed the upper limit value of the conditional expression (6), a variation in field curvature or lateral chromatic aberration becomes large over entire zoom range, which is not desirable.

The conditional expression (7) defines the average value of the refractive indices of the materials of the positive lenses included in the first lens unit L1. As a consequence of satisfying the conditional expression (7), it is easier to achieve the reduction in size of the entire system and to obtain good optical performances over entire zoom range. If the average value of the refractive indices of the materials of the positive lenses included in the first lens unit L1 is too small so as to fall below the lower limit value in the conditional expression (7), the curvature of the lens surface of the positive lens is increased whereby the spherical aberration or the coma aberration is increased at the telephoto end in particular, which is not desirable.

On the other hand, if the average value of the refractive indices of the materials of the positive lenses included in the first lens unit L1 is too large so as to exceed the upper limit value in the conditional expression (7), the Petzval sum becomes larger in the negative direction and leads to the increase in field curvature or astigmatism, which is not desirable.

The conditional expression (8) defines the average value of the Abbe numbers of the materials of the positive lenses included in the first lens unit L1. As a consequence of satisfying the conditional expression (8), it is easier to obtain good optical performances. If the average value of the Abbe numbers of the materials of the positive lenses included in the first lens unit L1 is too small so as to fall below the lower limit value in the conditional expression (8), the axial chromatic aberration in a visible light range is increased at the telephoto end in particular, which is not desirable.

On the other hand, if the average value of the Abbe numbers of the materials of the positive lenses included in the first lens unit L1 is too large so as to exceed the upper limit in the conditional expression (8), the axial chromatic aberration in the visible light range is corrected too much at the telephoto end in particular, which is not desirable.

In each example, it is preferable to set the numerical ranges of the conditional expressions (4) to (8) as shown below:

$$0.07 < nd3p-(-0.0134\times\nu d3p+2.43) < 0.30 \qquad (4a);$$

$$0.5 < \mathrm{fdoe} \times \sum_{i=1}^{n}\left(1/(f1i \times \nu d1i)\right) < 1.2 \qquad (5a);$$

$$-0.60 < f2/f3 < -0.15 \qquad (6a);$$

$$1.58 < nd1p < 1.75 \qquad (7a);$$

and

$$45.0 < \nu d1p < 61.0 \qquad (8a).$$

In each example, the zoom lens having a small entire system, a wide angle of view, a high zoom ratio, and high optical performances over entire zoom range is easily obtained by configuring the respective elements as described above. Moreover, it is possible to further enhance the effect of the present invention by combining two or more of the conditional expressions mentioned above.

Next, a description will be given of a lens configuration of each of the examples. Here, the lenses are assumed to be arranged in order from the object side to the image side unless otherwise specified.

[Example 1]

The first lens unit L1 includes: a cemented lens obtained by cementing a negative lens of a meniscus shape having a convex surface on the object side with a positive lens of a biconvex shape; and a positive lens of a meniscus shape having a convex surface on the object side. The diffractive optical element Ldoe consists of the cemented lens. A diffraction plane of a laminated type is formed on a cement surface of the diffractive optical element Ldoe.

Provision of the diffraction plane allows good correction of the axial chromatic aberration at the telephoto end in particular. Thus, the first lens unit L1 is formed from a small number of lenses while achieving the high zoom ratio. The second lens unit L2 includes three negative lenses and one positive lens. Specifically, the second lens unit L2 includes: a negative lens of a meniscus shape having a convex surface on the object side; a negative lens of a biconcave shape; and a cemented lens obtained by cementing a positive lens of a biconvex shape with a negative lens of a biconcave shape.

The above-described lens configuration effectively corrects the field curvature at the wide-angle end and the lateral chromatic aberration over entire zoom range. The third lens unit L3 includes: a positive lens of a biconvex shape with two surfaces each being of an aspheric shape; and a negative lens of a meniscus shape having a convex surface on the object side. The occurrence of the spherical aberration at the wide-angle end is reduced by adopting the aforementioned configuration. The fourth lens unit L4 includes: a cemented lens obtained by cementing a positive lens of a biconvex shape having an aspheric surface on the object side with a negative lens of a biconcave shape; and a positive lens of a biconvex shape. By adopting the aforementioned configuration, the occurrence of the field curvature over entire zoom range is reduced while achieving an increase in zoom ratio.

[Example 2]

The first lens unit L1 includes: a cemented lens obtained by cementing a negative lens of a meniscus shape having a convex surface on the object side with a positive lens; and a positive lens of a meniscus shape having a convex surface on the object side. The diffractive optical element Ldoe consists of the cemented lens. A diffraction plane of a laminated type is formed on a cement surface of the diffractive optical element Ldoe. Provision of the diffraction plane allows good correction of the axial chromatic aberration at the telephoto end in particular. Thus, the first lens unit L1 is formed from a small number of lenses while achieving the high zoom ratio.

The second lens unit L2 includes three negative lenses and one positive lens. Specifically, the second lens unit L2 includes: a negative lens of a meniscus shape having a convex surface on the object side; a negative lens of a meniscus shape having a convex surface on the object side; a negative lens of a biconcave shape; and a positive lens of a biconvex shape. The above-described lens configuration effectively corrects the field curvature at the wide-angle end and the lateral chromatic aberration over entire zoom range. The third lens unit L3 and the fourth lens unit L4 have the same configurations as those of Example 1.

[Example 3]

The first lens unit L1 and the second lens unit L2 have the same configurations as those of Example 2. The third lens unit L3 includes: a positive lens of a biconvex shape with two surfaces each being of an aspheric shape; a cemented lens obtained by cementing a positive lens of a meniscus shape having a convex surface on the object side with a negative lens of a meniscus shape having a convex surface on the object side; and a positive lens of a biconvex shape with two surfaces each being of an aspheric shape.

The occurrence of the spherical aberration and the axial chromatic aberration at the wide-angle end is reduced by adopting the aforementioned configuration. The fourth lens unit L4 includes a negative lens of a biconcave shape. The fourth lens unit L4 is formed from a single negative lens to reduce the weight and to facilitate control during focusing. The fifth lens unit L5 includes a positive lens of a biconvex shape. Here, telecentricity is increased by providing the positive lens as a last lens. Thus, an off-axis light flux is made incident on the image pickup element at a near-perpendicular angle to reduce light falloff at edges of an screen due to shading.

[Example 4]

The first lens unit L1 and the second lens unit L2 have the same configurations as those of Example 2. The third lens unit L3 includes: a positive lens of a biconvex shape with two surfaces each being of an aspheric shape; a cemented lens obtained by cementing a negative lens of a meniscus shape having a convex surface on the object side with a positive lens of a meniscus shape having a convex surface on the object side; and a positive lens of a biconvex shape with two surfaces each being of an aspheric shape. The occurrence of the spherical aberration and the axial chromatic aberration at the wide-angle end is reduced by adopting the aforementioned configuration. The fourth lens unit L4 and the fifth lens unit L5 have the same configurations as those of Example 3.

[Fifth Example]

The first lens unit L1 and the second lens unit L2 have the same configurations as those of Example 2. The third lens unit L3 includes: a positive lens of a biconvex shape with two surfaces each being of an aspheric shape; a cemented lens obtained by cementing a positive lens of a biconvex shape with a negative lens of a biconcave shape; and a positive lens of a biconvex shape with two surfaces each being of an aspheric shape. The occurrence of the spherical aberration and the axial chromatic aberration at the wide-angle end is reduced by adopting the aforementioned configuration. The fourth lens unit L4 and the fifth lens unit L5 have the same configurations as those of Example 3.

Note that the cemented lens in each example except for the diffractive optical element Ldoe may be provided as lenses separated from each other with a small air clearance. Meanwhile, an aperture diameter of the aperture stop SP in each example may be kept constant or changed during zooming. By changing the aperture diameter, it is possible to favorably cut off a lower-line coma flare of the off-axis light flux that may occur prominently on the telephoto side in particular, thus making it easier to obtain better optical performances. The aforementioned change falls within the expected scope of modifications and changes of the lens shape in the zoom lens of this embodiment. The same applies to all the examples.

Next, an example of an image pickup apparatus which is a monitoring camera that applies the zoom lens of this embodiment as its image pickup optical system will be described with reference to Fig. 11. In Fig. 11, reference sign 10 denotes a camera body and reference sign 11 denotes an image pickup optical system including any one of the zoom lenses of Examples 1 to 5. Reference numeral 12 denotes a solid-state image pickup element (a photoelectric conversion element) such as a CCD sensor and a CMOS sensor embedded in the camera body and configured to receive light of an object image formed by the image pickup optical system 11. An image pickup apparatus having a small size and high optical performances is realized by applying the zoom lens of this embodiment to the image pickup apparatus such as a digital video camera and a monitoring camera as described above.

Note that the zoom lens of each of the examples is also applicable to a projection optical system for a projecting apparatus (a projector).

Although the preferred embodiment of the present invention has been described above, it is to be understood that the present invention is not limited only to this embodiment and various modifications and changes are possible within the scope of the invention.

In addition to any one of the zoom lenses described above, the image pickup apparatus of this embodiment may include a circuit (a correction unit) configured to electrically correct at least one of the distortion and the lateral chromatic aberration. The above-mentioned configuration to allow the distortion and the like of the zoom lens can reduce the number of the lenses as a whole and facilitate downsizing thereof. In the meantime, by electrically correcting the lateral chromatic aberration, it is easier to reduce color blurring and to improve resolution of a taken image.

Here, an image pickup system (a monitoring camera system) including the zoom lens of any one of the examples and a control unit to control the zoom lens may be constructed. In this case, the control unit may control the zoom lens so that each of the lens units is moved during zooming as described above. In this case, the control unit does not always have to be integrated with the zoom lens. Hence, the control unit may be provided separately from the zoom lens. For example, a control unit (a control apparatus) may be located remote from a drive unit to drive the respective lenses in the zoom lens, and configured to include a transmission unit to transmit a control signal (a command) for controlling the zoom lens. The above-mentioned control unit can remote-control the zoom lens.

Meanwhile, a configuration to control the zoom lens in response to an input from a user to an operating unit may be adopted by providing the control unit with the operating unit such as a controller and buttons for remote-controlling the zoom lens. For example, a zoom-in button and a zoom-out button are provided as the operating unit so as to transmit the signals from the control unit to the drive unit for the zoom lens in such a way that the magnification of the zoom lens is increased when a user presses the zoom-in button and the magnification of the zoom lens is decreased when the user presses the zoom-out button.

In the meantime, the image pickup system may include a display unit such as a liquid crystal panel to display information concerning the zooming by the zoom lens (a state of movement). Examples of the information concerning the zooming by the zoom lens include a zoom magnification (a zoom state) and an amount of movement (a state of movement) of each lens unit. In this case, the user can remote-control the zoom lens through the operating unit while watching the information concerning the zooming by the zoom lens displayed on the display unit. In this case, the display unit and the operating unit may be integrated together by adopting a touch panel, for example.

Specific numerical data of Examples 1 to 5 will be shown below. In each set of the numerical data, assuming that i indicates the order counted from the object side, then ri denotes a curvature radius of an i-th optical surface (an i-th surface) and di denotes an axial interval between the i-th surface and an (i+1)-th surface. Meanwhile, ndi and νdi denote the refractive index and the Abbe number of the material of an optical member between the i-th surface and the (i+1)-th surface for the d-line, respectively.

The refractive indices for the Fraunhofer F-line (486.1 nm), the d-line (587.6 nm), the C-line (656.3 nm), and the t-line (1013.98 nm) are defined as nF, nd, nC, and nt, respectively. The Abbe number νd and the partial dispersion ratio θCt concerning the C-line and the t-line are given by the following expressions:

$$\nu d = (nd-1)/(nF-nC);$$

and

$$\theta Ct = (nC-nt)/(nF-nC).$$

Assuming that the wavelengths of the d-line, the C-line, the F-line, and the t-line are defined as λd, λC, λF, and λt, respectively, the Abbe number νddoe concerning the d-line and the partial dispersion ratio θCtdoe concerning the C-line and the t-line of a diffraction plane are expressed by the following expressions:

$$\nu ddoe = \lambda d/(\lambda F-\lambda C);$$

and

$$\theta Ctdoe = (\lambda C-\lambda t)/(\lambda F-\lambda C).$$

Accordingly, the Abbe number νddoe concerning the d-line and the partial dispersion ratio θCtdoe concerning the C-line and the t-line of the diffraction plane turn out to be -3.45 and 2.10, respectively. The diffraction plane has the Abbe number of a negative value, and therefore brings about an action opposite to that of an ordinary optical material. If an X axis is a direction of an optical axis, an H axis is a direction perpendicular to the optical axis, a traveling direction of the light is positive, R denotes a paraxial curvature radius, K denotes a conic constant, and A4, A6, A8, and A10 denote aspheric constants, respectively, then an aspheric shape is defined by the following expression:

$$X = \frac{H^2/R}{1+\sqrt{1-(1+K)(H/R)^2}} + A4H^4 + A6H^6 + A8H^8 + A10H^{10}.$$

A suffix * indicates a surface having an aspheric shape. A notation "e-x" means $10^{-x}$. A notation BF represents an air-equivalent back focus. An total lens length is a value obtained by adding the back focus BF to a distance from a first lens surface to a last lens surface. A focal length, an F number, and a half angle of view represent values when focusing on an object at infinity, respectively. In the meantime, relations of the respective conditional expressions mentioned above and numerical examples are shown in Table 1.

[Numerical Data 1]

[unit: mm]

Surface data

| Surface number | r | d | nd | νd | θct |
|---|---|---|---|---|---|
| 1 | 53.207 | 1.30 | 1.85478 | 24.8 | |
| 2(diffraction) | 31.565 | 7.58 | 1.60311 | 60.6 | |
| 3 | -1895.712 | 0.15 | | | |
| 4 | 30.259 | 3.87 | 1.69680 | 55.5 | |
| 5 | 78.106 | (variable) | | | |
| 6 | 70.889 | 0.45 | 2.00100 | 29.1 | |
| 7 | 7.017 | 3.51 | | | |
| 8 | -17.846 | 0.40 | 1.88300 | 40.8 | |
| 9 | 33.045 | 1.00 | | | |
| 10 | 19.769 | 3.19 | 1.84666 | 23.9 | |
| 11 | -15.372 | 0.40 | 1.49700 | 81.5 | |
| 12 | 46.166 | (variable) | | | |
| 13(stop) | ∞ | 1.00 | | | |
| 14* | 11.597 | 5.22 | 1.49710 | 81.6 | 0.8349 |
| 15* | -50.604 | 1.00 | | | |
| 16 | 16.986 | 0.55 | 1.77250 | 49.6 | |
| 17 | 10.564 | (variable) | | | |
| 18* | 18.647 | 4.46 | 1.49700 | 81.5 | |
| 19 | -13.912 | 0.50 | 1.85478 | 24.8 | |
| 20 | -40.684 | 0.64 | | | |
| 21 | 96.625 | 2.50 | 1.43700 | 95.1 | |
| 22 | -16.151 | (variable) | | | |
| 23 | ∞ | 1.46 | 1.51633 | 64.1 | |
| 24 | ∞ | 0.50 | | | |
| Image plane | ∞ | | | | |

Diffraction plane data
2nd surface (diffraction plane)
C2=-1.06193e-004

C4=2.35917e-008
C6=2.02650e-010
C8=-1.14993e-012
C10=1.75418e-015

Aspheric surface data

14th surface
K=1.74592e-001
A4=-8.63223e-005
A6=-7.14528e-007
A8=6.36118e-009
A10=-1.28941e-010

15th surface
K=-2.66104e+000
A4=2.49334e-006
A6=1.83909e-007
A8=-4.55244e-009

18th surface
K=-1.56620e+000
A4=-3.38326e-005
A6=-2.87566e-008
A8=-2.29409e-009

Various data

Zoom ratio 29.50

| | Wide angle | Middle | Telephoto |
|---|---|---|---|
| Focal length | 4.49 | 46.19 | 132.55 |
| F number | 1.46 | 2.69 | 4.61 |
| Half angle of view (deg) | 33.73 | 3.72 | 1.30 |
| Image height | 3.00 | 3.00 | 3.00 |
| total lens length | 95.57 | 95.57 | 95.57 |
| BF | 13.45 | 18.94 | 6.80 |
| d5 | 0.60 | 26.73 | 30.98 |
| d12 | 32.27 | 6.14 | 1.89 |
| d17 | 11.52 | 6.03 | 18.17 |
| d22 | 11.99 | 17.48 | 5.34 |

Zoom lens unit data

| Unit | Start surface | Focal length |
|---|---|---|
| 1 | 1 | 44.08 |
| 2 | 6 | -7.06 |
| 3 | 13 | 32.14 |
| 4 | 18 | 20.14 |

[Numerical Data 2]

[unit mm]

Surface data

| Surface number | r | d | nd | vd | θCt |
|---|---|---|---|---|---|
| 1 | 55.833 | 1.35 | 1.85478 | 24.8 | |
| 2(diffraction) | 27.483 | 6.38 | 1.63854 | 55.4 | |

(continued)

| Surface number | r | d | nd | vd | θCt |
|---|---|---|---|---|---|
| 3 | 618.743 | 0.15 | | | |
| 4 | 29.252 | 3.65 | 1.77250 | 49.6 | |
| 5 | 97.313 | (variable) | | | |
| 6 | 76.526 | 0.70 | 1.91082 | 35.3 | |
| 7 | 7.119 | 2.77 | | | |
| 8 | 108.662 | 0.60 | 1.76385 | 48.5 | |
| 9 | 14.821 | 1.79 | | | |
| 10 | -22.107 | 0.60 | 1.69680 | 55.5 | |
| 11 | 65.843 | 0.15 | | | |
| 12 | 19.184 | 1.73 | 1.95906 | 17.5 | |
| 13 | -170.272 | (variable) | | | |
| 14(stop) | ∞ | (variable) | | | |
| 15* | 11.118 | 5.54 | 1.55332 | 71.7 | 0.8164 |
| 16* | -64.579 | 0.10 | | | |
| 17 | 16.017 | 0.60 | 1.83481 | 42.7 | |
| 18 | 9.874 | (variable) | | | |
| 19* | 29.827 | 4.04 | 1.49710 | 81.6 | |
| 20 | -10.722 | 0.55 | 2.00100 | 29.1 | |
| 21 | -24.220 | 0.12 | | | |
| 22 | 72.343 | 3.06 | 1.49700 | 81.5 | |
| 23 | -15.052 | (variable) | | | |
| 24 | ∞ | 1.46 | 1.51633 | 64.1 | |
| 25 | ∞ | 0.50 | | | |
| Image plane | ∞ | | | | |

Diffraction plane data
2nd surface (diffraction plane)
C2=-1.21450e-004
C4=9.56401e-008
C6=-6.09701e-011
C8=-1.24186e-013

Aspheric surface data
15th surface
K=0.00000e+000
A4=-6.26250e-005
A6=-4.17338e-007
A8=3.77194e-009
A10=-5.35642e-011

16th surface
K=0.00000e+000
A4=3.96315e-005
A6=5.43948e-008

19th surface
K=5.82826e+000
A4=-6.37081e-005
A6=-2.47886e-007
A8=-3.48314e-009

Various data

Zoom ratio 29.50

| | Wide angle | Middle | Telephoto |
|---|---|---|---|
| Focal length | 4.45 | 45.33 | 131.26 |

(continued)

| | | | |
|---|---|---|---|
| F number | 1.44 | 2.72 | 4.60 |
| Half angle of view (deg) | 35.72 | 4.04 | 1.40 |
| Image height | 3.20 | 3.20 | 3.20 |
| total lens length | 92.50 | 92.50 | 92.50 |
| BF | 14.35 | 20.08 | 7.65 |
| d5 | 0.60 | 23.80 | 27.58 |
| d13 | 28.69 | 5.50 | 1.72 |
| d14 | 5.17 | 2.31 | 1.00 |
| d18 | 9.80 | 6.93 | 20.66 |
| d23 | 12.89 | 18.62 | 6.19 |

Zoom lens unit data

| Unit | Start surface | Focal length |
|---|---|---|
| 1 | 1 | 40.02 |
| 2 | 6 | -6.81 |
| 3 | 15 | 30.23 |
| 4 | 19 | 20.54 |

[Numerical Data 3]

[unit mm]

Surface data

| Surface number | r | d | nd | vd | θCt |
|---|---|---|---|---|---|
| 1 | 40.403 | 1.20 | 1.85478 | 24.8 | |
| 2(diffraction) | 26.036 | 5.49 | 1.60311 | 60.6 | |
| 3 | 216.545 | 0.15 | | | |
| 4 | 32.935 | 3.04 | 1.69680 | 55.5 | |
| 5 | 100.506 | (variable) | | | |
| 6 | 73.845 | 0.70 | 1.83481 | 42.7 | |
| 7 | 7.383 | 3.00 | | | |
| 8 | 42.993 | 0.50 | 1.80400 | 46.6 | |
| 9 | 19.600 | 2.09 | | | |
| 10 | -18.175 | 0.50 | 1.71300 | 53.9 | |
| 11 | 57.461 | 0.10 | | | |
| 12 | 20.397 | 1. 68 | 1.95906 | 17.5 | |
| 13 | -379.916 | (variable) | | | |
| 14(stop) | ∞ | (variable) | | | |
| 15* | 10.760 | 6.49 | 1.49700 | 81.5 | 0.8258 |
| 16* | -35.904 | 2.66 | | | |
| 17 | 11.698 | 2.64 | 1.49700 | 81.5 | 0.8258 |
| 18 | 73.562 | 0.60 | 1.95375 | 32.3 | |
| 19 | 8.567 | 2.62 | | | |
| 20* | 7.785 | 3.23 | 1.49700 | 81.5 | 0.8258 |
| 21* | -33.015 | (variable) | | | |
| 22 | -347.420 | 0.40 | 1.85150 | 40.8 | |
| 23 | 8.731 | (variable) | | | |
| 24 | 14.350 | 2.16 | 1.91082 | 35.3 | |

(continued)

| Surface number | r | d | nd | vd | θCt |
|---|---|---|---|---|---|
| 25 | -32.741 | 2.51 | | | |
| 26 | ∞ | 1.75 | 1.51633 | 64.1 | |
| 27 | ∞ | 0.50 | | | |
| Image plane | ∞ | | | | |

Diffraction plane data
2nd surface (diffraction plane)
C2=-1.17150e-004
C4=1.06537e-007
C6=-1.72605e-010
C8=1.48193e-014

Aspheric surface data
15th surface
K=-1.01752e+000
A4=2.50205e-005
A6=-3.11953e-008
A8=6.45910e-010
A10=-5.40428e-012

16th surface
K=0.00000e+000
A4=2.88355e-005
A6=-6.87739e-008

20th surface
K=0.00000e+000
A4=-1.88673e-004
A6=-3.45351e-006
A8=1.36902e-008
A10=-9.83589e-010

21st surface
K=0.00000e+000
A4=1.15960e-004
A6=-8.19258e-007

Various data

Zoom ratio 29.55

| | Wide angle | Middle | Telephoto |
|---|---|---|---|
| Focal length | 4.76 | 45.27 | 140.76 |
| F number | 1.44 | 2.63 | 4.60 |
| Half angle of view (deg) | 33.89 | 4.04 | 1.30 |
| Image height | 3.20 | 3.20 | 3.20 |
| total lens length | 89.37 | 89.37 | 89.37 |
| BF | 4.17 | 4.17 | 4.17 |
| d5 | 0.60 | 24.84 | 28.78 |
| d13 | 29.08 | 4.84 | 0.90 |
| d14 | 9.65 | 5.72 | 0.70 |
| d21 | 3.64 | 7.55 | 1. 98 |
| d23 | 2.97 | 2.99 | 13.58 |

Zoom lens unit data

| Unit | Start surface | Focal length |
|---|---|---|
| 1 | 1 | 43.45 |

(continued)

| Unit | Start surface | Focal length |
|---|---|---|
| 2 | 6 | -7.63 |
| 3 | 15 | 15.79 |
| 4 | 22 | -10.00 |
| 5 | 24 | 11.20 |

[Numerical Data 4]

[unit mm]

Surface data

| Surface number | r | d | nd | νd | θCt |
|---|---|---|---|---|---|
| 1 | 49.430 | 1.35 | 1.85478 | 24.8 | |
| 2(diffraction) | 30.048 | 7.15 | 1.62299 | 58.2 | |
| 3 | 312.657 | 0.15 | | | |
| 4 | 33.303 | 3.28 | 1.69680 | 55.5 | |
| 5 | 95.941 | (variable) | | | |
| 6 | 90.907 | 0.80 | 1.83481 | 42.7 | |
| 7 | 7.616 | 3.55 | | | |
| 8 | 43.227 | 0.60 | 1.76385 | 48.5 | |
| 9 | 13.074 | 2.70 | | | |
| 10 | -23.176 | 0.60 | 1.69680 | 55.5 | |
| 11 | 39.227 | 0.10 | | | |
| 12 | 18.960 | 1.92 | 1.92286 | 18.9 | |
| 13 | -371.553 | (variable) | | | |
| 14(stop) | ∞ | (variable) | | | |
| 15* | 10.558 | 5.05 | 1.49700 | 81.5 | 0.8258 |
| 16* | -57.427 | 6.10 | | | |
| 17 | 60.983 | 0.60 | 1.95375 | 32.3 | |
| 18 | 9.452 | 2.47 | 1.49700 | 81.5 | 0.8258 |
| 19 | 116.223 | 0.38 | | | |
| 20* | 8.060 | 2.83 | 1.49700 | 81.5 | 0.8258 |
| 21* | -31.288 | (variable) | | | |
| 22 | -60.844 | 0.40 | 1.85150 | 40.8 | |
| 23 | 8.477 | (variable) | | | |
| 24 | 18.199 | 1.97 | 1.91082 | 35.3 | |
| 25 | -22.005 | 2.49 | | | |
| 26 | ∞ | 1.75 | 1.51633 | 64.1 | |
| 27 | ∞ | 0.50 | | | |
| Image plane | ∞ | | | | |

Diffraction plane data
2nd surface (diffraction plane)
C2=-1.10388e-004
C4=6.25615e-008
C6=-6.95772e-011
C8=1.48193e-014

Aspheric surface data
15th surface
K=-1.66800e+000

A4=1.08233e-004
A6=-2.32732e-007
A8=3.89330e-009
A10=-2.28046e-011

16th surface
K=0.00000e+000
A4=2.37556e-005
A6=1.67969e-008

20th surface
K=0.00000e+000
A4=-1.85236e-004
A6=-1.31069e-006
A8=-8.89070e-008
A10=1.06936e-009

21st surface
K=0.00000e+000
A4=1.78207e-004
A6=-1.32686e-006

Various data

Zoom ratio 39.58

| | Wide angle | Middle | Telephoto |
|---|---|---|---|
| Focal length | 3.92 | 41.78 | 155.08 |
| F number | 1.65 | 3.00 | 4.93 |
| Half angle of view (deg) | 39.24 | 4.38 | 1.18 |
| Image height | 3.20 | 3.20 | 3.20 |
| total lens length | 92.36 | 92.36 | 92.36 |
| BF | 4.15 | 4.15 | 4.15 |
| d5 | 0.59 | 26.99 | 32.78 |
| d13 | 33.08 | 6.69 | 0.89 |
| d14 | 6.07 | 0.74 | 0.70 |
| d21 | 3.86 | 9.09 | 1. 98 |
| d23 | 2.59 | 2.70 | 9.85 |

Zoom lens unit data

| Unit | Start surface | Focal length |
|---|---|---|
| 1 | 1 | 46.99 |
| 2 | 6 | -6.83 |
| 3 | 15 | 14.94 |
| 4 | 22 | -8.71 |
| 5 | 24 | 11.20 |

[Numerical Data 5]

[unit mm]

Surface data

| Surface number | r | d | nd | νd | θCt |
|---|---|---|---|---|---|
| 1 | 69.351 | 2.00 | 1.85478 | 24.8 | |
| 2(diffraction) | 43.541 | 8.92 | 1.62299 | 58.2 | |
| 3 | 1332.553 | 0.15 | | | |

(continued)

| Surface number | r | d | nd | νd | θCt |
|---|---|---|---|---|---|
| 4 | 43.706 | 3.93 | 1.60311 | 60.6 | |
| 5 | 103.689 | (variable) | | | |
| 6 | 85.460 | 0.90 | 1.91082 | 35.3 | |
| 7 | 9.503 | 4.33 | | | |
| 8 | 78.594 | 0.60 | 1.76385 | 48.5 | |
| 9 | 20.075 | 2.88 | | | |
| 10 | -25.065 | 0.60 | 1.60311 | 60.6 | |
| 11 | 42.578 | 0.10 | | | |
| 12 | 24.418 | 2.19 | 1.95906 | 17.5 | |
| 13 | -317.091 | (variable) | | | |
| 14(stop) | ∞ | (variable) | | | |
| 15* | 10.776 | 5.85 | 1.49700 | 81.5 | 0.8258 |
| 16* | -53.713 | 4.92 | | | |
| 17 | 37.985 | 2.20 | 1.43700 | 95.1 | 0.8427 |
| 18 | -24.436 | 0.60 | 1.95375 | 32.3 | |
| 19 | 19.813 | 2.56 | | | |
| 20* | 8.232 | 2.81 | 1.49700 | 81.5 | 0.8258 |
| 21* | -28.478 | (variable) | | | |
| 22 | -45.764 | 0.40 | 1.85150 | 40.8 | |
| 23 | 8.849 | (variable) | | | |
| 24 | 16.665 | 2.16 | 1.91082 | 35.3 | |
| 25 | -22.683 | 2.48 | | | |
| 26 | ∞ | 1.75 | 1.51633 | 64.1 | |
| 27 | ∞ | 0.50 | | | |
| Image plane | ∞ | | | | |

Diffraction plane data
2nd surface (diffraction plane)
A2=-7.65163e-005
A4=2.62734e-008
A6=-2.37848e-011
A8=1.48193e-014

Aspheric surface data

15th surface
K=-1.32628e+000
A4=7.80039e-005
A6=1.42926e-007
A8=-8.50572e-011
A10=1.30037e-011

16th surface
K=0.00000e+000
A4=2.04044e-005
A6=8.58515e-008

20th surface
K=0.00000e+000
A4=-1.95337e-004
A6=-1.56355e-006
A8=5.75894e-008
A10=-1.48501e-009

21st surface
K=0.00000e+000
A4=2.34513e-004

A6=7.89634e-007

Various data

Zoom ratio 64.27

| | Wide angle | Middle | Telephoto |
|---|---|---|---|
| Focal length | 3.77 | 51.81 | 242.40 |
| F number | 1.65 | 3.00 | 6.50 |
| Half angle of view (deg) | 40.31 | 3.53 | 0.76 |
| Image height | 3.20 | 3.20 | 3.20 |
| total lens length | 119.38 | 119.38 | 119.38 |
| BF | 4.14 | 4.14 | 4.14 |
| d5 | 0.60 | 41.50 | 50.48 |
| d13 | 50.78 | 9.88 | 0.90 |
| d14 | 9.35 | 1.45 | 0.70 |
| d21 | 4.32 | 10.71 | 1.97 |
| d23 | 2.09 | 3.60 | 13.09 |

Zoom lens unit data

| Unit | Start surface | Focal length |
|---|---|---|
| 1 | 1 | 68.42 |
| 2 | 6 | -8.76 |
| 3 | 15 | 17.80 |
| 4 | 22 | -8.68 |
| 5 | 24 | 10.83 |

[Table 1]

| | | Example 1 | Example 2 | Example 3 | Example 4 | Example 5 |
|---|---|---|---|---|---|---|
| Conditional Expression (1) | G31 | 81.56 | 71.68 | 81.54 | 81.54 | 81.54 |
| | G32 | - | - | 81.54 | 81.54 | 95.1 |
| | G33 | - | - | 81.54 | 81.54 | 81.54 |
| Conditional Expression (2) | G31 | -0.0944 | -0.0665 | -0.1034 | -0.1034 | -0.1034 |
| | G32 | - | - | -0.1034 | -0.1034 | -0.1503 |
| | G33 | - | - | -0.1034 | -0.1034 | -0.1034 |
| Conditional Expression (3) | | 6.48 | 5.23 | 10.42 | 11.33 | 16.53 |
| Conditional Expression (4) | G31 | 0.160 | 0.084 | 0.160 | 0.160 | 0.160 |
| | G32 | - | - | 0.160 | 0.160 | 0.281 |
| | G33 | - | - | 0.160 | 0.160 | 0.160 |
| Conditional Expression (5) | | 0.708 | 0.662 | 0.632 | 0.640 | 0.584 |
| Conditional Expression (6) | | -0.22 | -0.23 | -0.48 | -0.46 | -0.49 |
| Conditional Expression (7) | | 1.65 | 1.71 | 1.65 | 1.66 | 1.61 |
| Conditional Expression (8) | | 58.1 | 52.5 | 58.1 | 56.8 | 59.4 |
| fdoe | | 4708.4 | 4116.9 | 4268.0 | 4529.5 | 6534.6 |
| f11 | | -93.4 | -64.7 | -89.1 | -92.6 | -141.9 |
| f12 | | 51.6 | 44.9 | 48.5 | 52.8 | 72.1 |

(continued)

| | Example 1 | Example 2 | Example 3 | Example 4 | Example 5 |
|---|---|---|---|---|---|
| f13 | 68.6 | 52.9 | 69.0 | 71.7 | 122.3 |
| *G3i represents a positive lens included in a third lens unit, the positive lens being located at an i-th position counted from an object side. | | | | | |

While the present invention has been described with reference to exemplary embodiments, it is to be understood that the invention is not limited to the disclosed exemplary embodiments.

## Claims

**1.** A zoom lens comprising in order from an object side to an image side:

a first lens unit (L1) having a positive refractive power;
a second lens unit (L2) having a negative refractive power;
a third lens unit (L3) having a positive refractive power; and
a rear unit (LR) including one or more lens units (L4, L5),
wherein intervals between adjacent lens units are changed during zooming,
wherein the first lens unit (L1) comprises a diffractive optical element,
wherein the third lens unit (L3) comprises a positive lens formed by using a material satisfying conditional expressions of

$$68.0 < \nu d3p < 100.0,$$

and

$$-0.25 < \theta Ct3p-(0.0047\times\nu d3p+0.546) < -0.02,$$

where νd3p represents an Abbe number of the material of the positive lens included in the third lens unit (L3), and θCt3p represents a partial dispersion ratio of the material concerning a C-line and a t-line, and
wherein the following conditional expression is satisfied:

$$4.2 < f1/BFt < 20.0,$$

where f1 represents a focal length of the first lens unit (L1) and BFt represents a back focus of the zoom lens when focusing on infinity at a telephoto end.

**2.** The zoom lens according to claim 1, wherein
the third lens unit (L3) comprises the positive lens formed by using the material satisfying a conditional expression of

$$0.05 < nd3p-(-0.0134\times\nu d3p+2.43) < 0.50,$$

where nd3p represents a refractive index of the material of the positive lens included in the third lens unit.

**3.** The zoom lens according to claim 1 or 2, wherein
a following conditional expression is satisfied:

$$0.4 < \mathrm{fdoe}\times\sum_{i=1}^{n}\left(1/(f1i\times\nu d1i)\right) < 1.5,$$

where fdoe represents a focal length of a diffraction plane of the diffractive optical element, and f1i and vd1i represent a focal length and the Abbe number, respectively, of one of lenses included in the first lens unit, the one of lenses being located at an i-th position counted from an object side where i is a positive integer.

4. The zoom lens according to any one of claims 1 to 3, wherein a following conditional expression is satisfied:

$$-0.70 < f2/f3 < -0.10,$$

where f2 represents a focal length of the second lens unit (L2) and f3 represents a focal length of the third lens unit (L3).

5. The zoom lens according to any one of claims 1 to 4, wherein the first lens unit (L1) is arranged not to move during zooming.

6. The zoom lens according to any one of claims 1 to 5, wherein the first lens unit (L1) comprises a negative lens, a positive lens, and a positive lens arranged in order from the object side to the image side, and following conditional expressions are satisfied:

$$1.55 < nd1p < 1.80,$$

and

$$40.0 < \nu d1p < 65.0,$$

where ndlp represents an average value of refractive indices and vd1p represents an average value of the Abbe numbers, respectively, of materials of the positive lenses included in the first lens unit.

7. The zoom lens according to any one of claims 1 to 6, wherein the second lens unit (L2) comprises three negative lenses and one positive lens.

8. The zoom lens according to any one of claims 1 to 7, wherein the rear unit consists of a fourth lens unit (L4) having a positive refractive power.

9. The zoom lens according to any one of claims 1 to 8, wherein the rear unit (LR) further consists of a fifth lens unit (L5) having a positive refractive power arranged in order from an object side to an image side.

10. The zoom lens according to claim 8, wherein the fourth lens unit (L4) is arranged to move during focusing.

11. The zoom lens according to any one of claims 1 to 10, wherein a following conditional expression is satisfied:

$$68.0 < \nu d3p < 97.0.$$

12. The zoom lens according to any one of claims 1 to 11, wherein a following conditional expression is satisfied:

$$-0.20 < \theta Ct3p-(0.0047\times\nu d3p+0.546) < -0.05.$$

13. The zoom lens according to any one of claims 1 to 12, wherein a following conditional expression is satisfied:

$$4.6 < f1/BFt < 18.0.$$

**14.** An image pickup apparatus comprising:

the zoom lens according to any one of claims 1 to 13; and
an image pickup element configured to receive light of an image formed by the zoom lens.

**15.** The image pickup apparatus according to claim 14, further comprising:
a correction unit configured to electrically correct an aberration of the zoom lens.

**16.** An image pickup system comprising:

the zoom lens according to any one of claims 1 to 13; and
a control unit configured to control the zoom lens during zooming.

**17.** The image pickup system according to claim 16, wherein
the control unit is provided separately from the zoom lens, and comprises a transmission unit configured to transmit a control signal for controlling the zoom lens.

**18.** The image pickup system according to claim 16 or 17, wherein
the control unit is provided separately from the zoom lens, and comprises an operating unit configured to operate the zoom lens.

**19.** The image pickup system according to any one of claims 16 to 18, further comprising:
a display unit configured to display information concerning zooming by the zoom lens.

*FIG. 1*

L0
L1
Ldoe
L2
SP
L3
LR
L4
GB
IP
4b
4a
4c

# FIG. 2

Fno=1.46
ω=35.6°
ω=35.6°
ω=35.6°
d
g
F
t
C
S
M
C
F
t
g
-0.200
0.200
-0.100
0.100
-5.000
5.000
-0.020
0.020
SPHERICAL ABERRATION
ASTIGMATISM
DISTORTION (%)
CHROMATIC ABERRATION
Fno=2.69
ω=3.73°
ω=3.73°
ω=3.73°
g
C
F
t
d
S
M
F
C
g
t
-0.200
0.200
-0.100
0.100
-5.000
5.000
-0.020
0.020
SPHERICAL ABERRATION
ASTIGMATISM
DISTORTION (%)
CHROMATIC ABERRATION
Fno=4.61
ω=1.31°
ω=1.31°
ω=1.31°
d
C
t
g
F
S
M
F
C
t
g
-0.400
0.400
-0.100
0.100
-5.000
5.000
-0.020
0.020
SPHERICAL ABERRATION
ASTIGMATISM
DISTORTION (%)
CHROMATIC ABERRATION

FIG. 3

L0
L1
Ldoe
L2
SP
L3
LR
L4
GB
IP
4b
4a
4c

# FIG. 4

Fno=1.44
d
g
C
F
t
-0.400
0.400
SPHERICAL ABERRATION
ω=37.3°
M
S
-0.200
0.200
ASTIGMATISM
ω=37.3°
-5.000
5.000
DISTORTION (%)
ω=37.3°
C
t
F
g
-0.040
0.040
CHROMATIC ABERRATION
Fno=2.72
g
C
F
d
t
-0.400
0.400
SPHERICAL ABERRATION
ω=4.05°
S
M
-0.200
0.200
ASTIGMATISM
ω=4.05°
-5.000
5.000
DISTORTION (%)
ω=4.05°
F
C
t
g
-0.040
0.040
CHROMATIC ABERRATION
Fno=4.6
d
g
C
t
F
-0.400
0.400
SPHERICAL ABERRATION
ω=1.41°
S
M
-0.200
0.200
ASTIGMATISM
ω=1.41°
-5.000
5.000
DISTORTION (%)
ω=1.41°
C
t
F
g
-0.040
0.040
CHROMATIC ABERRATION

FIG. 5

L0
L1
Ldoe
L2
SP
L3
LR
GB
L4
L5
IP
4a
4b
4c

*FIG. 6*

Fno=1.44
g
d
t
F
C
-0.600
0.600
SPHERICAL ABERRATION
ω=35.1°
S
M
-0.100
0.100
ASTIGMATISM
ω=35.1°
-5.000
5.000
DISTORTION (%)
ω=35.1°
C
F
t
g
-0.040
0.040
CHROMATIC ABERRATION
Fno=2.63
F
C
g
d
t
-0.600
0.600
SPHERICAL ABERRATION
ω=3.99°
M
S
-0.100
0.100
ASTIGMATISM
ω=3.99°
-5.000
5.000
DISTORTION (%)
ω=3.99°
g
F
C
t
-0.040
0.040
CHROMATIC ABERRATION
Fno=4.6
F
d
C
t
g
-0.600
0.600
SPHERICAL ABERRATION
ω=1.3°
S
M
-0.100
0.100
ASTIGMATISM
ω=1.3°
-5.000
5.000
DISTORTION (%)
ω=1.3°
F
t
C
g
-0.040
0.040
CHROMATIC ABERRATION

FIG. 7

L0
L1
Ldoe
L2
SP
L3
LR
L4
L5
GB
IP
4a
4b
4c

# FIG. 8

Fno=1.65
g
C
t
d
F
-0.600
0.600
SPHERICAL ABERRATION
ω=40.7°
S
M
-0.100
0.100
ASTIGMATISM
ω=40.7°
-5.000
5.000
DISTORTION (%)
ω=40.7°
C
F
t
g
-0.040
0.040
CHROMATIC ABERRATION
Fno=3
C
d
t
F
g
-0.600
0.600
SPHERICAL ABERRATION
ω=4.32°
S
M
-0.100
0.100
ASTIGMATISM
ω=4.32°
-5.000
5.000
DISTORTION (%)
ω=4.32°
C
F
g
t
-0.040
0.040
CHROMATIC ABERRATION
Fno=4.93
C
F
d
t
g
-0.600
0.600
SPHERICAL ABERRATION
ω=1.18°
M
S
-0.100
0.100
ASTIGMATISM
ω=1.18°
-5.000
5.000
DISTORTION (%)
ω=1.18°
g
t
C
F
-0.040
0.040
CHROMATIC ABERRATION

*FIG. 9*

L0
L1
Ldoe
L2
SP
LR
GB
L3
L4
L5
IP
4a
4b
4c

# FIG. 10

Fno=1.65
C
t
d
g
F
-1.000
1.000
SPHERICAL ABERRATION
ω=41.9°
S
M
-0.100
0.100
ASTIGMATISM
ω=41.9°
-5.000
5.000
DISTORTION (%)
ω=41.9°
g
F
t
C
-0.040
0.040
CHROMATIC ABERRATION
Fno=3
g
d
t
C
F
-1.000
1.000
SPHERICAL ABERRATION
ω=3.51°
S
M
-0.100
0.100
ASTIGMATISM
ω=3.51°
-5.000
5.000
DISTORTION (%)
ω=3.51°
F
g
C
t
-0.040
0.040
CHROMATIC ABERRATION
Fno=6.5
d
g
F
t
C
-1.000
1.000
SPHERICAL ABERRATION
ω=0.77°
M
S
-0.100
0.100
ASTIGMATISM
ω=0.77°
-5.000
5.000
DISTORTION (%)
ω=0.77°
g
F
C
t
-0.040
0.040
CHROMATIC ABERRATION

FIG. 11

10
12
11

Europäisches Patentamt
European Patent Office
Office européen des brevets

# EUROPEAN SEARCH REPORT

Application Number
EP 18 16 6761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/268625 A1 (YAMASAKI SHINJI [JP]) 25 October 2012 (2012-10-25) | 1,2,4-19 | INV. G02B15/173 |
| Y | * examples 1-4 * | 1 | |
| A | | 3 | |
| Y | US 2008/273249 A1 (HAMANO HIROYUKI [JP] ET AL) 6 November 2008 (2008-11-06) * paragraphs [0092], [0123] * | 1 | |
| X | US 2014/300782 A1 (KIMURA TOMONORI [JP]) 9 October 2014 (2014-10-09) | 1,2,4-19 | |
| Y | * example 1 * | 1 | |
| A | | 3 | |

TECHNICAL FIELDS SEARCHED (IPC)

G02B

The present search report has been drawn up for all claims

| Place of search | Date of completion of the search | Examiner |
|---|---|---|
| Munich | 17 August 2018 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 16 6761

This annex lists the patent family members relating to the patent documents cited in the above-mentioned European search report. The members are as contained in the European Patent Office EDP file on
The European Patent Office is in no way liable for these particulars which are merely given for the purpose of information.

17-08-2018

| Patent document cited in search report | Publication date | Patent family member(s) | Publication date |
|---|---|---|---|
| US 2012268625 A1 | 25-10-2012 | JP 5665637 B2 | 04-02-2015 |
| | | JP 2012226091 A | 15-11-2012 |
| | | US 2012268625 A1 | 25-10-2012 |
| US 2008273249 A1 | 06-11-2008 | JP 5028110 B2 | 19-09-2012 |
| | | JP 2008209866 A | 11-09-2008 |
| | | US 2008273249 A1 | 06-11-2008 |
| US 2014300782 A1 | 09-10-2014 | CN 104101991 A | 15-10-2014 |
| | | JP 6150592 B2 | 21-06-2017 |
| | | JP 2014203027 A | 27-10-2014 |
| | | US 2014300782 A1 | 09-10-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011090099 A
- JP 2013134303 A